# EUROPEAN PATENT SPECIFICATION

(11) **EP 3 076 797 B1**
(45) Date of publication and mention of the grant of the patent: **27.02.2019**
(21) Application number: 14758140.9
(22) Date of filing: 01.09.2014
(51) Int. Cl.: A23G 1/36, A23G 1/40, A23G 1/42

(54) **COMPOSITION AND METHOD OF TROPICALIZING CHOCOLATE**
ZUSAMMENSETZUNG UND VERFAHREN ZUR TROPIKALISIERUNG VON SCHOKOLADE
COMPOSITION ET PROCÉDÉ DE TROPICALISATION DE CHOCOLAT

(30) Priority: 02.09.2013 EP 13182612
(43) Date of publication of application: 12.10.2016
(73) Proprietor: Nestec S.A., 1800 Vevey (CH)
(72) Inventor: HUGHES, Christopher, York Yorkshire YO30 4SX (GB)
(74) Representative: Lumsden, Stuart Edward Henry
(86) International application number: PCT/EP2014/068485
(87) International publication number: WO 2015/028656

(56) References cited:
- WO-A1-2013/045523
- US-A- 4 446 166
- US-A- 6 010 735
- US-A1- 2005 118 327

## Description

### Field of the invention

The present invention relates to fat based tropicalizing agents' compositions, to methods for the preparation thereof, to methods of tropicalizing chocolate or analogues thereof, and to chocolate or analogues of chocolate containing the tropicalizing agents. In particular, it relates to the use of enzymes in the methods of the invention and to their incorporation into tropicalizing agent compositions and products of the invention.

### Background of the invention

Conventionally manufactured chocolate consists of sugars, cocoa solids and protein (usually from milk) homogeneously dispersed in fats and fatty substances originating from cocoa butter. Chocolate analogues contain other vegetable fats in partial/total replacement of the cocoa butter fat. Often the continuous fat phase also contains dairy fat.

Cocoa butter typically starts to soften at about 28°C, with consequent loss of the mechanical strength of the chocolate. This means that at the high ambient temperatures frequently encountered in tropical countries, chocolate becomes sticky or even runny. It tends to stick to the wrapper and fall apart when the wrapper is removed, leaving a semi-liquid mass that can often only be eaten with a spoon if cleanliness is desired. Enrobed chocolate products typically lose integrity under these conditions, with their contents often leaking and individual units tending to stick together in the packaging. Chocolate also loses the 'snap' that is an important (and pleasurable) textural characteristic of chocolate stored and eaten under cooler conditions.

Attempts to produce a chocolate that is resistant to heat are numerous. Persons skilled in the art generally refer to methods to achieve chocolate or chocolate analogues that are heat resistant as to methods to tropicalize chocolate. The approaches most widely used can be divided two main groups: 1) incorporation of high-melting point fats; and 2) creation of a three-dimensional matrix or network of sugar crystals or protein particles that will act as a sponge and hold the fat - thus maintaining the structure of the product even on melting of the fat. Over the last century many different methods have been reported.

There are two major drawbacks to the use of high-melting fats in chocolate. Namely that food regulations in many countries restrict the use of substitutes for cocoa butter in chocolate. Secondly, the high-melting point fats in chocolate-like products give an unpleasant waxy mouthfeel.

Many methods have been described for causing accretion of sugar crystals by adding water or a polyol to chocolate, as originally disclosed in DE 389 127 (1919). CH 409,603 (1962) describes the direct incorporation of water into liquid chocolate mass during production causing a rapid increase in viscosity. As a result, it is impossible to pour the material into moulds or use for enrobing.

EP0189469 (1985) describes the mixing of a liquid polyol with tempered conventional chocolate mass before depositing it into molds. Polyols that are liquid at ambient temperatures (such as glycerol) are preferred, though the patent teaches that higher melting polyols (such as sorbitol) can also be used. The mixture is held at slightly elevated temperatures (24°C to 35°C) for a short period of time during which the viscosity rises. This is stated to be the result of a chemical reaction between the fat and the polyol. The time and temperature of the holding period are critical parameters that control the viscosity increase - the viscosity must remain low enough for the subsequent molding or enrobing operations.

In the method described by US5,445,843 a polyol (such as glycerol) is encapsulated by emulsifying it with a liquid fat (such as molten cocoa butter) and lecithin as an emulsifier, then spray-chilling the emulsion. The emulsion "capsules" (which have an average diameter 100 microns) are added to liquid chocolate mass to achieve a polyol content of from 0.2 to 5% by weight. The product was reported to have remained liquid for several minutes.

The use of emulsification to avoid too rapid an incorporation of water into the chocolate mass is described in US 4,446,166. An oil-in-water emulsion (typically 50% water, 50% fat) is prepared with cocoa butter using lecithin as the emulsifier. The emulsion is cooled and milled to give partially or entirely solid particles that are then added to the chocolate mass at levels of between 2 and 10%. Once incorporated in the warmer liquid chocolate mass, the emulsion particles will melt, releasing the water droplets. A disadvantage of this method is the need to guarantee a homogeneous distribution of the emulsion particles before they melt. Premature release of water causes a sudden increase in viscosity that renders the chocolate unsuitable for molding or enrobing.

EP 0297054 describes a method for homogeneously dispersing water by using an aqueous foam. The foam is stabilized with an edible foaming agent (such as egg albumin) and added to conventionally prepared chocolate mass after tempering. The foam is added at levels that deliver from 0.5 to 2% of water, reportedly with no noticeable increase in viscosity to provide a treated chocolate usable for molding or enrobing. The trapped gases can be removed from the still liquid product by exposing it to reduced pressure. EP0407347 describes a similar method.

EP0393327 discloses another variation in which the aqueous phase of the water-in-oil emulsion contains sugars (such as sucrose or glucose) or polyols (such as sorbitol). The emulsion is prepared with 30 to 60% fat using emulsifying agent at a level of 0.1 to 3%. Described suitable emulsifying agents are lecithin, glycerol fatty acid ester, polyglycerol fatty acid ester, polyglycerol condensed ricinoleic acid ester and sucrose fatty acid ester that has an HLB not more than 7. The level of sugar or polyol in the aqueous phase of the emulsion can be between 20 and 60% and the level of water between 15 and 25%. The sugar or polyol in the aqueous phase is reported to provide smoother texture to the heat-stable chocolate mass. A storage period of about 20 days, however, is required for proper development of internal structure.

A similar method is disclosed in EP0442324, whereby an oil-in-water emulsion is prepared by mixing 30-80% of an oil or fat (for example, cocoa butter) in water containing a small amount of a suitable emulsifier. This emulsion is mixed at a level of about 5% with a conventionally manufactured and tempered chocolate mass that is then molded. It is stated to be important to control the temperature to be no higher than 90°F to keep the oil-in-water emulsion stable. The homogeneously dispersed water generates a viscosity increase of the chocolate mass during solidification of the finished product. However, it is still necessary to store the molded product for several days to establish heat stability.

US 5,486,376 describes the use of water-in-oil microemulsions to introduce finely dispersed water into chocolate mass. Similarly, US 6,159,526 describes addition of water to the chocolate as a water-in-oil emulsion stabilized by sucrose fatty acid esters (HLB < 3). US 6,159,526 is concerned primarily with adding water-based flavors to chocolate.

WO 93/06737 describes methods for making gels/pastes by adding water to "Raftiline" (inulin), starches (potato and corn), "Splendid" (pectin), or gum Arabic. The paste is then mixed into tempered chocolate that is molded.

US 5,468,509 describes a method for adding up to 16% water to chocolate. The chocolate supposedly remains moldable. Two mixtures are prepared. (1) Cocoa is coated with cocoa butter in the presence of an emulsifier and (2) water, a sweetener and milk solids are blended to form an aqueous phase. The two are gently blended and the product molded.

U.S. Patent No 5,965,179 aims to circumvent the problems of viscosity increase on the addition of water to chocolate by use of an extruder for processing the chocolate.. The water is added as an aqueous gel with microcrystalline cellulose. This gel is injected into the chocolate using a twin-screw extruder so as to form a viscous product containing 3 to 20% of added water.

US2005/0118327 describes the preparation of gel beads comprising 20-50% sugar or polyol, water, emulsifying agent and a gelling agent (hydrocolloids). The gel beads are formed by dispersing a hot aqueous sol (90°C-95°C) in a liquid fat in a high shear mixer, to form an emulsion, and then cooling to get gelification of the beads. The gel beads dispersed in fat are blended into molten chocolate mass. One drawback is that the release of the sugar/polyol syrup from the gel beads, requires activation. US2005/0118327 teaches the activation of gel bead degradation by freezing a temperatures of -5°C to -15°C. It is reported that without this cooling it is necessary to store the products for 10-14 days to develop shape retention properties.

In another approach WO91/19424 describes the preparation of gel beads comprising alginate or pectate, divalent metal ions and a sequestrant for the metal ions. The gel beads are used as fat substitutes.

EP0688506 describes the preparation of gels comprising polyol or polyol/water with gelling agents and alkali or alkali-earth metal salts. The gels are produced by heating to temperatures of 120°C and are then frozen in liquid nitrogen, before addition to liquid chocolate.These prior art references have drawbacks such as the release of water into the chocolate mass, which occurs early in the process and is not retarded for long enough for the material to be used for typical enrobing processes; the dispersion and release of water is not under sufficiently fine control to avoid development of unpleasantly gritty textures in the final product; and/or activation or an inconveniently long storage time is required for full development of the structures required to provide stability.

Many of the processes are complex, or require additional steps in the production procedure, and/or require the use of emulsifiers and/or gelling agents.

The associated need to provide a tropicalizing agent that delays any substantial increase in viscosity so that the materials can be used for conventional molding or enrobing processes and that provides a suitable texture and stability, or integrity, in a chocolate product, has been partially addressed by the tropicalizing agent and methods disclosed in the international patent publication WO2013/045523.

In particular, it is therein disclosed a tropicalizing agent comprising a liquid fat component and a plurality of discrete particles of insoluble water-absorbing food ingredient material loaded with water and/or a humectant liquid dispersed in the liquid fat component and its use to tropicalize chocolate or chocolate analogues.

There remains anyway a need to make the use of such tropicalizing agent as disclosed in International patent publication WO2013/045523 easier to industrialize at a reasonable cost.

In particular, it would be advantageous to achieve a progressive release of water and/or humectant into the chocolate mass, so that tropicalisation of chocolate is carried out during storage and delivery time to the shelves.

The inventor has now surprisingly found that insoluble food ingredientsloaded with water and/or other humectants achieve a tropicalizing effect on chocolate or chocolate analogues when subject to the activity of appropriate enzymes.

According to the disclosure the insoluble food ingredient particles loaded with water and/or a humectant could be incorporated into liquid chocolate mass in the presence of an appropriate enzymatic system and act as a tropicalizing agent, improving heat resistance of the resultant chocolate, without any significant viscosity increase over normal processing times, allowing processing of the chocolate by standard moulding or enrobing technologies.

### Summary of the invention

The inventor has developed a further improved route to introduce water and/or a humectant into chocolate or an analogue thereof to obtain a heat resistant (tropicalized) chocolate or analogue thereof.

As previously described in WO2013/045523, it was found that insoluble water-absorbing food ingredient particles can be used as a vehicle for the introduction of water and/or a humectant into liquid chocolate mass.

The insoluble food ingredient particles loaded with water and/or a humectant could be added to liquid chocolate mass without any significant viscosity increase over normal processing times, allowing processing of the chocolate by standard moulding or enrobing technologies, and act as a tropicalizing agent, improving heat resistance of the resultant chocolate.

The inventor has now surprisingly found that by adding an enzyme preparation having cellulase activity to the tropicalizing agent as described in WO2013/045523 or during the associated process of chocolate manufacture, a progressive release of water and/or humectant into the chocolate is achieved.

The effect is particularly unexpected as the enzyme system is capable of displaying its activity in a fat based environment, while it would normally be meant to be used in an aqueous system. Furthermore, it is especially surprising that the enzyme system is capable of displaying its activity in a fat based environment and with the limited mobility it has in the solid matrix of insoluble food ingredient particles.

The invention is defined by the claims.

According to one aspect of the disclosure, there is provided the use of an enzyme preparation having a cellulase activity to progressively release water and/or humectant from a tropicalizing agent comprising a liquid fat component and a plurality of discrete particles of insoluble water-absorbing food ingredient material loaded with water and/or a liquid humectant dispersed in the liquid fat component.

In another aspect, the disclosure encompasses the use of an enzyme preparation having a cellulase activity to achieve the progressive release of water and/or a humectant liquid in chocolate or chocolate analogue products comprising a tropicalizing agent, such tropicalizing agent comprising a liquid fat component and a plurality of discrete particles of insoluble water-absorbing food ingredient material loaded with water and/or a humectant liquid dispersed in the liquid fat component.

In another aspect the disclosure encompasses the use of an enzyme preparation having an cellulase activity for improving the heat stability of a chocolate or chocolate analogue product comprising a liquid fat component and discrete particles of insoluble water-absorbing food ingredient as a carrier component loaded with water and/or a humectant.

According to another aspect of the present disclosure, there is provided a tropicalizing agent composition comprising a liquid fat component, a plurality of discrete particles of insoluble water-absorbing food ingredient material loaded with water and/or a liquid humectant dispersed in the liquid fat component and an enzyme preparation having a cellulase activity.

In another aspect of the present disclosure, there is provided a process for preparing a tropicalizing agent composition comprising the steps of (a) mixing insoluble water-absorbing food ingredient particles in a liquid fat, (b) adding water and/or a humectant liquid to the mixture of step (a) in an amount to provide a ratio of water and/or humectant liquid to water-absorbing food ingredient particles such that the water and/or humectant liquid is absorbed by the discrete particles and (c) adding to the mixture of step (b) an enzyme preparation comprising at least one enzyme having a cellulase activity.

In further aspect of the present disclosure, there is provided a process for preparing a tropicalizing agent composition comprising the steps of: (a) mixing insoluble water-absorbing food ingredient particles in a liquid fat, and (b) adding water and/or a humectant liquid and an enzyme preparation having a cellulase activity to the mixture of step (a) in an amount to provide a ratio of water and/or humectant liquid to water-absorbing food ingredient particles such that the water and/or humectant liquid is absorbed by the discrete particles.

In another aspect the disclosure encompasses the use of a tropicalizing agent composition comprising a liquid fat component, discrete particles of insoluble water-absorbing food ingredient as a carrier component loaded with water and/or a humectant and an enzyme preparation having an cellulase activity, for improving the heat stability of a chocolate or chocolate analogue product.

In another aspect, the present invention provides a process for tropicalizing chocolate, or an analogue thereof, by combining a chocolate or a chocolate analogue mass, optionally a tempered chocolate mass or untempered chocolate analogue mass, with a tropicalizing agent composition according to the present invention so as to increase the structure of the tropicalized chocolate mass. Preferably, the amount of tropicalizing agent composition is sufficient to increase the shape retention of the tropicalized chocolate mass compared to a non-tropicalized mass.

In a further aspect, the present disclosure provides a process for tropicalizing chocolate, or an analogue thereof, by combining a chocolate or a chocolate analogue mass, optionally a tempered chocolate mass or untempered chocolate analogue mass, with a tropicalizing agent comprising a liquid fat component, a plurality of discrete particles of insoluble water-absorbing food ingredient material loaded with water and/or a humectant liquid dispersed in the liquid fat component and with an enzyme preparation having a cellulase activity so as to increase the structure of the tropicalized chocolate mass.

In an additional aspect, the disclosure encompasses a chocolate or chocolate analogue comprising a liquid fat component and a plurality of discrete particles of insoluble water-absorbing food ingredient material loaded with water and/or a liquid humectant dispersed in the liquid fat component and an enzyme preparation comprising having a cellulase activity in an amount sufficient to increase the integrity, heat stability or shape retention of the chocolate or chocolate analogue. In one preferred embodiment, the tropicalizing agent provides from about 0.1 to 5 weight percent polyol and/or water to the chocolate or chocolate analogue.

In a still further aspect, the disclosure encompasses a chocolate or chocolate analogue comprising a tropicalizing agent composition in an amount sufficient to increase the integrity, heat stability or shape retention of the chocolate or chocolate analogue.

In one preferred embodiment, the tropicalizing agent composition provides from about 0.1 to 5 weight percent polyol and/or water to the chocolate or chocolate analogue. According to the present invention, the terms "chocolate product" and "chocolate analogue product" identify respectively chocolate or chocolate analogue based products (also conventionally known as "compound"). Chocolate and chocolate analogue products of the invention include but are not limited to: a chocolate product, a chocolate analogue product (e.g. comprising cocoa butter replacers, cocoa-butter equivalents or cocoa-butter substitutes), a chocolate coated product, a chocolate analogue coated product, a chocolate coating for biscuits, wafers or other confectionery items, a chocolate analogue coating for biscuits, wafers or other confectionery.

The chocolate or chocolate analogue product may be in form of a moulded tablet, a moulded bar, an aerated product, or a coating for confectionery products, wafer, biscuits, among others. It may also have inclusions, chocolate layers, chocolate nuggets, chocolate pieces, chocolate drops. The chocolate or chocolate analogue product may further contain crispy inclusions e.g. cereals, like expanded or toasted rice or dried fruit pieces.

The terms "tropicalization", "tropicalizing methods", and variations thereof as used herein, refer to methods and processes of the invention to achieve heat and shape resistance in chocolate or chocolate analogue products.

The term "tropicalized products", and variations thereof as used herein, refers to chocolate and chocolate analogue products of the invention which are endowed with heat and shape resistance.

The term "tropicalizing agent," as used herein, generally refers to suitable materials according to the disclosure of International Patent Application patent publication WO2013/045523. In particular, it refers to a composition comprising a liquid fat component and a plurality of discrete particles of insoluble water-absorbing food ingredient material loaded with water and/or a humectant liquid dispersed in the liquid fat component that increase the stability, or structural integrity, in a tropicalized food product into which it is incorporated. The term "tropicalizing agent" thus includes materials that provide foodstuffs with the characteristics of shape retention, heat resistance, and preferably both. Preferably, the term tropicalizing agent can also refer to suitable materials that also delay or avoid any substantial increase in viscosity of the foodstuff into which they are incorporated.

As used herein, the term "tropicalizing agent" refers to a composition which doesn't contain any enzyme preparation having a cellulase activity.

The term "tropicalizing agent composition" as used herein and as distinct from the term "tropicalizing agent", generally refers to suitable materials according to the present disclosure. In particular, it refers to a composition comprising a liquid fat component, a plurality of discrete particles of insoluble water-absorbing food ingredient material loaded with water and/or a humectant liquid dispersed in the liquid fat component and an enzyme preparation having a cellulose activity, such composition increasing the stability, or structural integrity, in a tropicalized food product into which it is incorporated. The term "tropicalizing agent composition" thus includes materials as herein defined that provide foodstuffs with the characteristics of shape retention, heat resistance, and preferably both. Preferably, the term tropicalizing agent composition can also refer to suitable materials that also delay or avoid any substantial increase in viscosity of the foodstuff into which they are incorporated.

The terms "plurality of discrete particles of insoluble water-absorbing food ingredient material", "insoluble food ingredients", "insoluble food ingredient particles", "insoluble water-absorbing food ingredient particles", "solid matrix of insoluble food ingredient particles", "discrete particles of insoluble water-absorbing food ingredient", "discrete particles of insoluble water-absorbing food ingredient material", "insoluble water-absorbing food ingredient materials", "insoluble water-absorbing particles", "insoluble food grade particles", "insoluble water-absorbing particles", "water absorbing particles", "insoluble water-absorbing food particles", "insoluble water-absorbing food ingredient particles", "insoluble food particles", "insoluble water-absorbing food particles" are used interchangeably in the present disclosure, as it would be evident to a person skilled in the art.

In a preferred embodiment of the present invention, the tropicalizing agent or tropicalizing agent composition are fat based materials wherein the fat ingredients represent the major ingredient by weight within such materials.

Suitable humectants used in the present invention are food grade humectants liquids. Exemplary humectants according to the invention include propylene glycol, polyethylene glycol, polyols such as glycerol and sugar alcohols such as sorbitol, xylitol, maltitol, mannitol, sugar solution such as fructose, dextrose, galactose, or any mixture thereof. According to a particular embodiment the humectant liquid is a polyol. According to some embodiments the humectant liquid is glycerol. According to another embodiment the humectants liquid is propylene glycol. However other polyols are envisaged such as sugar alcohols.

According to one embodiment of the present invention the insoluble water absorbing ingredient food material is loaded with water and/or glycerol.

Exemplary insoluble water-absorbing food ingredient materials or particles have a cellulose component and include microcrystalline cellulose (MCC) and dietary fibres comprising an insoluble cellulose component. According to one embodiment the insoluble water-absorbing food ingredient particles are insoluble particles of dietary fibre. Fruit, vegetable and/or cereal fibres are contemplated. Exemplary dietary fibre particles used in the present invention include citrus fibre, apple fibre, oat fibre, potato fibre, pea fibre, wheat fibre, sugar cane fibre, sugar beet fibre, cocoa powder, carob fibre and any mixture thereof. In one preferred embodiment the dietary fibres are selected from citrus fibres, apple fibre, oat fibre, wheat fibre and potato fibre. In one embodiment the dietary fibres are citrus and wheat fibre. In a preferred embodiment the dietary fibres is citrus fiber. In an alternative embodiment the insoluble water-absorbing food ingredient particles is microcrystalline cellulose.

In one preferred embodiment the liquid fat is cocoa butter. The use of cocoa butter as the liquid fat component of the tropicalizing agent is particularly preferred for the preparation of a chocolate product, whereby food regulations in many countries restrict or forbid the addition of other fats to chocolate mass. In another preferred embodiment, the liquid fat includes one or more vegetable fats that are the same as a fat used in preparing a chocolate analogue mass, e.g. for a chocolate compound or compound coating product, so as to increase the compatibility and stability of the tropicalized chocolate analogue mass.

The terms "enzyme preparation having a cellulase activity" as used in the present invention refers to enzymatic material which is endowed with cellulase enzymatic activity. The term encompasses both pure enzymes (for example in the form of a dry powder) or mixtures thereof and composition/solutions comprising at least one enzyme having cellulase activity (for example in an aqueous solution or buffer). Suitable enzymes according to the present invention are pure enzymes or enzyme mixtures having a cellulase activity as enzymatic activity. Cellulase enzymatic activity is responsible for hydrolysis of 1,4-beta-D-glycosidic linkages in cellulose and its consequent break down to beta-glucose.

Exemplary enzymes used in the present invention include but are not limited to: Endocellulases, Exocellulases, Cellobiases, Oxidative Cellulases, Cellulose Phosphorylases, combinations thereof or mixtures comprising them. The enzyme used has a cellulase activity. Non-limiting commercially available examples of enzymes' preparations suitable for use in the present invention are: NS27200 (Novozymes SA), Rohament CL (AB Enzymes GmbH), Accelerase 1000 (Danisco US Inc).

Advantageously the tropicalizing agent composition of the present invention can be prepared from food ingredients and does not require the use of any emulsifying agent, gelling agent, nor other additive. Advantageously the tropicalizing agent composition is suitable for use in chocolate, whereby food regulations in many countries restrict or forbid the addition of artificial additives to chocolate.

Advantageously, a liquid fat component and a plurality of discrete particles of insoluble water-absorbing food ingredient material loaded with water and/or a liquid humectant dispersed in the liquid fat component along with an enzyme preparation comprising at least one enzyme having a cellulase activity can be added to liquid chocolate mass without inducing any significant increase in viscosity of the liquid chocolate mass over time, such that the chocolate mass can be worked and moulded, or used for enrobing, in conventional industrial production processes, whilst at the same time providing a chocolate product that exhibits improved shape stability at elevated temperatures above room temperature, e.g. at temperatures up to 40°C, and even at higher temperatures.

The chocolate product is dry to the touch and does not stick to its wrapper, or adopt the shape of the wrapper, even when exposed to temperatures above the melting range of the fat composition.

Advantageously good texture and organoleptic properties of regular chocolate are retained.

Advantageously tropicalization of chocolate or chocolate analogues according to the present invention uses simple and cost effective processes, suitable for industrial application, requiring no harsh conditions or expensive machinery. Advantageously the tropicalizing agent composition of the present invention requires only few ingredient components, and can be prepared with commercially available food ingredients. No expensive additives are required.

Advantageously the use of the tropicalizing methods according to the present invention provides a progressive release of water and/or a humectant liquid in chocolate or chocolate analogue products. Accordingly, tropicalization of chocolate chocolate analogue products may be carried out during storage and delivery time to the shelves.

### Brief description of the drawings

Figure 1 shows samples (E1, E1e1 and E1e2 ordered left to right) after being subjected to a mechanical sheer (slam test carried out by applying vertical force to the product), showing an increase in shape retention index with inclusion of both enzyme preparations tested.
Figure 2 shows samples [E1, E2, E3 and E4 (above from left to right) and E1 e1, E2e1, E3e1 and E4e1 (below from left to right)] after being subjected to a mechanical sheer (slam test carried out by applying vertical force to the product), showing an increase in shape retention index with inclusion of the enzyme preparations tested.
Figure 3 shows Peak force measurements displayed as a histogram to show the effect of enzyme on resistance to deformation, after storage at 22°C. It is shown a clear difference between samples incorporating enzyme preparations when compared to no enzyme addition.

### Detailed description of the invention

The inventor of the present invention has surprisingly found that by adding an enzyme preparation having cellulase activity to a tropicalizing agent comprising a liquid fat component and a plurality of discrete particles of insoluble water-absorbing food ingredient material loaded with water and/or a humectant liquid dispersed in the liquid fat component, or by adding such enzyme preparation having cellulase activity during the associated process of chocolate manufacture, a progressive release of water and/or humectant into the chocolate is achieved.

The insoluble water-absorbing particles can include particles of any suitable food ingredient material which have capacity to absorb water whilst retaining a solid structure, i.e. retaining the structure of discrete solid particles. The insoluble food grade particles remain independent solid particles when loaded with several times their own weight of the water and/or humectant liquid component. Insoluble water-absorbing particles have an insoluble framework that withstands hydration and a high porous volume or material swelling capacity. The insoluble water-absorbing food ingredient particles loaded with water and/or humectant liquid exist as discrete particles and do not form a gel. Without wishing to be bound by any theory it is understood that the particles of insoluble water-absorbing food ingredient loaded with water and/or humectants liquid form a crowded dispersion of discrete particles in the liquid phase. The insoluble water-absorbing food ingredient materials include cellulosic structures. For instance natural dietary fibres with a mixture of pectic components and cellulosic components exhibit good capacity to absorb water whilst retaining a solid structure. Preferably, exemplary insoluble water-absorbing food ingredient materials used in the invention include microcrystalline cellulose (MCC) and dietary fibres with cellulosic components. According to a preferred embodiment the insoluble water-absorbing food ingredient particles are selected from water-absorbing insoluble particles of dietary fibres. Fruit, vegetable and/or cereal fibres are contemplated, such as citrus, apple, kiwi fibre, blackcurrant, tomato, carrot, oat, pea, potato, carob, sugar cane, sugar beet, cocoa or wheat fibre, or other water-absorbing insoluble dietary fibres. Exemplary dietary fibre particles used in the present invention include citrus fibre, wheat fibre, apple fibre, oat fibre, potato fibre, pea fibre and any mixture thereof. Suitable dietary fibre particles are commercially available. According to one preferred embodiment the insoluble water-absorbing particles are citrus fibre particles, alone or in combination with other insoluble water-absorbing dietary fibre particles. In an
alternative embodiment the insoluble water-absorbing food ingredient particles are wheat fibre. In another embodiment the insoluble water-absorbing food ingredient particles are microcrystalline cellulose.

Suitably the particles can have an average particle size of between 5 and 200 microns, preferable between 10 and 100 microns, more preferably between 15 and 45 microns, most preferably between 25 and 30 microns. The size of dispersed particles in chocolate or chocolate analogues influences their detection on the palate and the eating quality of the confection. Small particles below the organoleptic limit (-50 microns), i.e. particles having an average particles size of less than about 50 microns, are preferred, for instance particles having average particle size of at least about 10 microns less than about 50 microns. Particles of a desired size, e.g. particles of less than about 50 microns can be fractionated from commercially available powders, e.g. fibre powders, by sieving or manufactured by size reduction milling.

According to the present invention, insoluble water-absorbing particles may be used in an amount of 5 - 50% by weight within the tropicalizing agent composition. Preferably, they are used in an amount of 10-20% by weight within the tropicalizing agent composition.

According to the present invention, insoluble water-absorbing particles may be used in an amount of 0.05-5% by weight within the tropicalized chocolate product or analogue thereof. Preferably, they are used in an amount of 0.1-3% by weight within the tropicalized chocolate product or analogue thereof.

The water absorbing particles can be loaded with water, humectant liquid or a mixture of water and/or humectant liquid. According to one embodiment of the invention, water and liquid humectant may be used at any reciprocal ratio. According to one embodiment the tropicalizing agent composition comprises water and a humectant liquid in a water:humectant ratio of from 1:10 to 10:1 w/w, preferably in a water:humectant ratio from 1:2 to 2:1 w/w, for instance in a water:humectant ratio of about 1:1. According to one embodiment the tropicalizing agent composition comprises water and a polyol in a water:polyol ratio of from 1:10 to 10:1 w/w, preferably in a water:polyol ratio from 1:2 to 2:1 w/w, for instance in a water:polyol ratio of about 1:1. Suitable humectants according to the present invention are food grade humectants liquids. The humectant is in a liquid form, and may be used both in the form of a solution in water and without dilution. Exemplary humectants used in the invention include propylene glycol, polyethylene glycol, polyols such as glycerol, sorbitol, xylitol, maltitol, mannitol, sugar solution such as fructose, dextrose, galactose, or any mixture thereof. In some embodiments the humectant is a sugar solution, particularly a solution of a monosaccharide in water, for instance a solution of fructose, dextrose, galactose or any mixture thereof in water.

In some embodiments the humectant is a polyol. A preferred polyol is glycerol. However other polyols are envisaged such as sugar alcohols, e.g. sorbitol, xylitol, erythitol, maltitol, mannitol. According to certain embodiments the polyol is selected from glycerol, sorbitol, xylitol or any mixture thereof. According to other embodiments the humectant liquid is propylene glycol. According to some embodiments the humectant is a mixture of a polyol, such as glycerol, together with another humectant liquid, such as another polyol and/or propylene glycol.

In one preferred embodiment, water absorbing particles are loaded with water.

In another preferred embodiment, water absorbing particles are loaded a liquid humectant, preferably glycerol. In a further preferred embodiment, the liquid humectant is glycerol and it is used without dilution.

Water can be pure potable water or can be provided as part of an aqueous solution, such as for instance an aqueous solution of carbohydrates, polyols, salts and/or proteins. For example water may be provided in the form a fruit juice, or in the form of milk. In a preferred embodiment water is used alone, i.e. pure water.

The hydrophilic water-absorbing particles contain by absorption and/or adsorption glycerol and/or water.

The upper limit on the water and/or glycerol for use in the present invention is largely governed by the swelling and water retention properties of the particles. Swelling of particles on hydration and plasticising with water and/or humectant liquid, such as glycerol, increases with increased liquid loading and thereby increases the particles volume fraction in the dispersion. Over-loading the particle capacity risks engulfing them in water and/or a humectant liquid, and leading to the formation of a non-dispersed phase in the liquid fat component. Such overloading therefore has a negative effect on the liquid retaining protective properties of the particle and influences the ability of the tropicalizing agent to inhibit significant viscosity rise on addition to liquid chocolate mass, and the development of shape stability of the chocolate product. The upper limit on the water and/or humectant liquid for use according to the invention is therefore dependent on the particular type of particles selected, i.e. in view of the swelling and water retention properties of the particulate material. The lower limits for water and/or humectant liquid loading are governed largely by the desired content of tropicalizing agent or tropicalizing agent composition in the chocolate product for obtaining a water and/or humectant liquid load sufficient to provide the desired shape stability properties.

According to the present invention, humectant and /or water may be used in an amount of 15-50% by weight within tropicalizing agent composition. Preferably, they are used in an amount of 20- 40 % by weight within the tropicalizing agent composition.

According to the present invention, humectant and /or water may be used in an amount of 0.5 - 5% by weight within the chocolate or chocolate analogue. Preferably, they are used in an amount of 1- 3 % by weight within the chocolate or chocolate analogue.

Suitably according to the invention the water and/or humectant liquid component and the insoluble water-absorbing food particles are used in ratio of from about 1:10 to about 8:1 w/w, for instance from about 1:10 to about 6:1 w/w, preferably from about 1:10 to about 5:1 w/w. In one embodiment the water and/or humectant component and the insoluble water-absorbing food particles are present in ratio of from about 1:5 to about 5:1 w/w, preferably in a ratio of about 1:3 to about 3:1, for example in a ratio of from about 2:1 to about 1:2.

The liquid fat component can be any vegetable fat or oil suitable for use in edible foods. The fat component should be compatible with the chocolate or chocolate analogue to which it will be added. Suitable fats include cocoa butter, cocoa butter equivalents (CBE), cocoa butter substitutes (CBS), vegetable oils and butter oils amongst others. Suitable CBE and CBS are widely commercially available. Exemplary CBE include Coberine™ (Loders Croklaan), and Illexao™ SC70 (AarhusKarlshamn). Exemplary CBS include the Palkena™ Range and Melano™ Range (Fuji Oil).

Preferably, the liquid fat includes cocoa butter, particularly where the tropicalizing agent or tropicalizing agent composition will be used in chocolate products. In one preferred embodiment the liquid fat is cocoa butter and tropicalizing agent compositions are included in regular chocolate, rather than chocolate analogues. However, the liquid fat can include one or more cocoa butter substitutes, particularly where the tropicalizing agent or tropicalizing agent composition will be used in chocolate analogues. In another embodiment, the liquid fat preferably includes one or more vegetable fats, e.g., non-lauric vegetable fats. Where the tropicalizing agent or tropicalizing agent composition will be used in a chocolate analogue, the vegetable fat is preferably the same fat or at least one of the same fats, used in preparing the chocolate analogue mass so as to increase the compatibility and stability of the tropicalized chocolate mass.

The amount of the liquid fat component in the tropicalizing agent or tropicalizing agent composition should be sufficient to allow the dispersion of the particles, loaded with glycerol and/or water therein, so as to retain free-flowing behaviour of the particles during preparation of the tropicalizing agent or tropicalizing agent composition. A sufficient amount of liquid fat component can typically include from about 30 to about 95 weight percent, preferably about 40 to about 80 weight percent of the tropicalizing agent or tropicalizing agent composition, for instance from about 50 to about 70 weight percent of the tropicalizing agent or tropicalizing agent composition.

Advantageously, according to the present invention the ratio within tropicalizing agent or tropicalizing agent composition between the insoluble water-adsorbing particles: water and/or humectant: liquid fat will typically be 1:2:3.

According to the present invention, humectant and /or water may be used in an amount of 0.5 - 5%.by weight within the chocolate or chocolate analogue. Preferably, they are used in an amount of 1- 3 % by weight within the chocolate or chocolate analogue.

The amount of the enzyme preparation having a cellulase activity which is added to the tropicalizing agent or incorporated into the tropicalizing agent composition should be sufficient to allow the breakdown of cellulose into beta-glucose and associated progressive release of water and/or a humectant liquid from the particles of insoluble water-absorbing food ingredient material.

In one embodiment, a sufficient amount of the enzyme preparation having a cellulase activity can typically range from about 0.001 to about 5 weight percent, preferably about 0.01 to about 2 weight percent of the tropicalizing agent composition.

In another embodiment, a sufficient amount of the enzyme preparation having a cellulase activity can typically range from about 0.0001 to about 5 weight percent, preferably about 0.001 to about 2 weight percent of chocolate product or chocolate analogue product.

According to the present invention, the tropicalizing agent or tropicalizing agent composition may be added in an amount of 1 - 20% by weight within the chocolate or chocolate analogue. Preferably, they are used in an amount of 2- 15 % by weight within the chocolate or chocolate analogue.

According to one embodiment a tropicalizing agent composition according to the disclosure may be prepared by a very simple process comprising the steps of (a) mixing insoluble water-absorbing food ingredient particles in a liquid fat, (b) adding water and/or a humectant liquid to the mixture of step (a) in an amount to provide a ratio of water and/or humectant liquid to water-absorbing food ingredient particles such that the water and/or humectant liquid is absorbed by the discrete particles and (c) adding to the mixture of step (b) an enzyme preparation comprising at least one enzyme having a cellulase activity.

In another embodiment, a tropicalizing agent composition according to the disclosure may be prepared by a very simple process comprising the steps of (a) mixing insoluble water-absorbing food ingredient particles in a liquid fat, (b) adding water and/or a humectant liquid and an enzyme preparation having a cellulase activity to the mixture of step (a) in an amount to provide a ratio of water and/or humectant liquid to water-absorbing food ingredient particles such that the water and/or humectant liquid is absorbed by the discrete particles.

The preparation process should be carried out a temperature above the melting point of the fat components. For instance where the fat component is cocoa butter a temperature of 40°C or above, such as around 50°C may be preferred. Where a fat component, such as an oil, which is liquid at room temperature is used then the preparation of the tropicalizing agent can be carried out at room temperature, i.e. without any heating.

In one variant of the process, the dispersion of particles in a portion of the liquid oil component is blended with an emulsion of the polyol and/or water component in a second portion of the liquid oil component.

An emulsion of the polyol and/or water component in the liquid oil component can be carried out by gentle and simple mixing of the components with agitation, for instance in conventional mixing/blending apparatus. Optionally an emulsifying agent may be added in order to facilitate emulsion formation. The emulsifier component can be any suitable emulsifier. Preferably, the emulsifier component includes lecithin, e.g. soy lecithin. The emulsifier, when used, is typically present in the tropicalizing agent or tropicalizing agent composition in an amount from about 0.001 to 2 weight percent, preferably from about 0.10 to 1 weight percent, for example 0.10 to 0.5 weight percent based on the total weight of the tropicalizing agent.

Preferably, the prepared tropicalizing agent or or tropicalizing agent composition can be maintained molten for later addition to a liquid chocolate mass. Alternatively, the tropicalizing agent or composition can be allowed to cool and solidify for storage and distribution, and can be remelted for addition to liquid chocolate, or can be particulated or flaked for 'dry' addition to liquid chocolate, upon which the fat melts and the particles disperse.

In an alternative disclosure the tropicalizing agent can prepared without addition of a liquid fat component, and the insoluble food particles loaded with water and/or humectant liquid can be mixed with liquid chocolate mass without first forming a dispersion in a liquid fat component. For instance the tropicalizing may be prepared by mixing the insoluble water-absorbing food particles with the water and/or humectants liquid component, whereby the insoluble water-absorbing food particles absorb the water and/or humectant liquid to become loaded with water and/or humectant liquid. The loaded particles may then be added to liquid chocolate mass with mixing to disperse the loaded particles in the liquid chocolate. In a preferred embodiment the mixture of insoluble food ingredient particles and water and/or humectants is allowed to equilibrate for a period of time, such as from 1 to 48 hours, in order to optimize the absorption of water and/or humectants by the insoluble food ingredient particles, before addition to the liquid chocolate mass.

Accordingly the tropicalizing agent or tropicalizing agent composition according to the invention can be prepared in a very simple and cost-efficient manner without the need for harsh conditions or for any complex apparatus.

The tropicalizing agent as above described along with an enzyme preparation having a cellulase activity or the tropicalizing agent composition of the invention can be dispersed within chocolate and chocolate analogue products to improve the shape retention of the resultant chocolate product even at high temperatures, such as those up to about 40°C. The temporarily entrapped water and/or humectant liquid component of the tropicalizing agents is dispersed within the chocolate or an analogue thereof, with the particulate carrier. The addition of the food particles loaded with water and/or humectant liquid dispersed in a liquid fat component facilitates the efficient and homogeneous dispersion of the loaded particles in the hydrophilic liquid chocolate mass. Without being bound by theory, it is understood that the delayed release of water and/or humectant liquid achieved by the presence of an enzyme preparation having cellulose activity causes the development of a three-dimensional structuring of the dispersed particles into a self-supporting matrix capable of retaining the liquid fat and maintaining the shape of the confectionery item when that fat is molten or substantially liquid, thereby maintaining the structure of the chocolate product even at elevated temperatures, e.g. up to about 40°C

The tropicalizing agent along with an enzyme preparation having a cellulase activity or the tropicalizing agent composition of the invention can be added to liquid chocolate or chocolate analogue and dispersed by agitation, either manual agitation and/or with use of standard conventional mixing apparatus. Advantageously the fat-based tropicalizing agent or composition is readily dispersed in a liquid chocolate or chocolate analogue to provide a substantially uniform and homogeneous dispersion of the food particles through the liquid chocolate mass.

The tropicalizing agent along with an enzyme preparation having a cellulase activity or the tropicalizing agent composition of the invention can be added to liquid chocolate either before, after, or in combination with tempering of the chocolate. Increase in viscosity of the chocolate following addition of the agent is delayed to such a degree as to permit the tempering process (manually or by machine, thermally/mechanically or by addition of seeding agent or pre-crystallised chocolate mass) without making the chocolate subsequently unworkable and without blocking the tempering machine and its associated pipes and pumps.

The release of water and/or humectant liquid upon addition of the tropicalizing agent along with an enzyme preparation having a cellulase activity or the tropicalizing agent composition of the invention to a liquid chocolate or chocolate analogue mass is sufficiently slow to avoid a significant increase in the viscosity of the liquid chocolate mass for a period of hours, making the tropicalized food product suitable for use in the manufacture of moulded or enrobed products by conventional industrial processes. By "significant increase" it is meant a viscosity increase that would prohibit a conventional moulding or enrobing process. Preferably, the viscosity increase is less than about 20 percent, more preferably less than about 10 percent.

The proportion of tropicalizing agent or tropicalizing agent composition to be added to the chocolate or chocolate analogue is gauged on the quantity of water and/or humectant liquid required to provoke the development of adequate heat stability in desired time. Typically, suitable content of water and/or humectant in the finished chocolate product may range from about 0.1 to about 5 weight percent based on the total weight of the chocolate product. In a preferred embodiment the tropicalizing agent or composition is added to the chocolate mass in an amount to provide a water and/or humectant content in the final chocolate product of from about 0.5% to about 3%, more preferably about 0.5% to about 2% wt/wt.

Addition of too much tropicalizing agent or composition, or of tropicalizing agent or composition which contains a too high proportion of water and/or humectant liquid component to particulate carrier component, can tend to cause too rapid an increase in viscosity, particularly if multiple of these factors are present, for the product to be suitable for moulding, enrobing, or both. Addition of too little tropicalizing agent or composition can cause a delay in the time over which the desired heat shape stability properties are developed, or even failure to produce the desired heat stability properties. Such concentrations and sizes can be readily determined through routine experimentation by those of ordinary skill in the art once reference is made to the invention described herein.

In an analogous manner, addition of too much of enzyme preparation, can tend to cause too rapid an increase in viscosity or the product to be suitable for moulding, enrobing, or both. Addition of too little of enzyme preparation can cause a delay in the time over which the desired heat shape stability properties are developed, or even failure to produce the desired heat stability properties. Such concentrations and sizes can be readily determined through routine experimentation by those of ordinary skill in the art once reference is made to the invention described herein.

According to one embodiment the fat content, e.g. cocoa butter content of the starting chocolate mass, to which the tropicalizing agent or composition is to be added, is reduced compared to the desired final fat content, by an amount such that the fat content, e.g. cocoa butter, of the tropicalizing agent or composition provides the remaining fat amount, to produce a final chocolate product having the desired fat content.

Advantageously, the resultant chocolate products including a tropicalizing agent along with an enzyme preparation having a cellulase activity or the tropicalizing agent composition of the invention do not stick to a wrapper, or adopt the shape of the wrapper, at elevated temperatures, even at temperatures as high as 40°C, do not result in adverse appearance or mouthfeel, and in chocolate or analogues thereof do not have adverse effects on bloom. Moreover, the tropicalized chocolates and chocolate analogues have improved shape retention at elevated temperature, even at temperatures as high as 40°C compared to corresponding regular chocolate or chocolate analogue product without the tropicalizing agent. Another advantage that can be obtained with the present invention is the ability to use conventional natural food ingredients only, such as water and dietary fibres, while still achieving the good tropicalizing effect. Advantageously the tropicalizing agent along with an enzyme preparation having a cellulase activity or the tropicalizing agent composition of the invention are suitable for use in regular chocolate, as they can use only ingredients allowed under food regulations in the manufacture of chocolate.

The tropicalizing agent along with an enzyme preparation having a cellulase activity or the tropicalizing agent composition of the invention can be added to any type of chocolate e.g. white, milk, dark chocolate or any intermediate, or any type of chocolate analogue e.g. compound coating. The heat resistance can be expected to develop most effectively in masses containing a high proportion of sugar and milk particulate solids of fine granulometry and relatively low fat content due to the loading and proximity of the building blocks of the particle network.

The tropicalized chocolate and chocolate analogues of the invention can advantageously be used in tropical countries where hot weather causes frequent or rapid melting of chocolate, chocolate analogues. For example, chocolate analogues including coatings and covertures, which are thin and tend to melt rapidly, can surprisingly and advantageously be formed with the tropicalizing agent of the invention. The tropicalized food products of the invention remain non-sticky so as to smoothly slide out of a wrapper and to avoid leaving food product on the consumer's fingers during consumption.

Advantageously, tropicalisation of chocolate and chocolate analogues of the present do not require any variation to the standard conditions for manufacturing the chocolate, as the tropicalizing effect is provided by the progressive release of water and/or humectant achieved as a consequence of the cellulase enzymatic activity which operates under very mild conditions (for example at ambient temperature during storage or transport of the products).

The term "about," as used herein, should generally be understood to refer to both numbers in a range of numerals. Moreover, all numerical ranges herein should be understood to include each whole integer within the range.

The invention will now be described in further details in the following non-limiting examples.

### Examples

Examples 1 to 4 and their use as below described are provided by way of comparison to show the unexpected advantageous effect achieved by incorporation of enzyme preparation having cellulase activity.

### Reference Example 1 (E1):

Reference composition E1 was prepared with a composition as follows:

| | |
|---|---|
| Fat (Palm Kernel Oil) | 49.79% |
| Citrus Fibre (Herbacel AQPlus Citrus Fibre) | 16.6% |
| Humectant (Glycerol) | 33.2% |
| Lecithin | 0.41% |

100g of dry citrus fibre powder was dispersed in 300g of molten cocoa butter substitute (Palm Kernel Oil) and lecithin 7.5g at a temperature of 55°C using a the liquidizer jug attachment of a Kenwood Multi-Pro food processor operating at maximum speed for a duration of 2 minutes.

200g of glycerol was warmed to 55°C and added slowly and incrementally to the dispersion of fibre with continuous high speed. A homogeneous mix of all four components was made, the glycerol being evenly distributed amongst the dispersion of fibre particles. The total period of mixing during the addition of glycerol was 30 minutes.

The mixture was allowed to cool and solidify at ambient temperature. Alternatively the mixture can be stored warm (e.g. at around 50°C) ready for later use.

### Reference Example 2 (E2):

Reference Composition E2 was prepared with a composition as follows:

| | |
|---|---|
| Fat (Palm kernel Oil) | 49.79% |
| Citrus Fibre (Herbacel AQPlus Citrus Fibre) | 16.6% |
| Water | 33.2% |
| Lecithin | 0.41% |

100g of dry citrus fibre powder was dispersed in 300g of molten cocoa butter substitute (Palm Kernel Oil) and lecithin (7.5g) at a temperature of 55°C using a the liquidizer jug attachment of a Kenwood Multi-Pro food processor operating at maximum speed for a duration of 2 minutes.

200g of water was warmed to 55°C and added slowly and incrementally to the dispersion of fibre with continuous high speed. A homogeneous mix of all four components was made, the water being evenly distributed amongst the dispersion of fibre particles. The total period of mixing during the addition of water was 30 minutes. The mixture was allowed to cool and solidify at ambient temperature. Alternatively the mixture can be stored warm (e.g. at around 50°C) ready for later use.

### Reference Example 3 (E3):

Reference Composition E3 was prepared with a composition as follows:

| | |
|---|---|
| Fat (Palm Kernel Oil) | 49.79% |
| Wheat Fibre (Wheat WF101 Vitacel® Rettenmair) | 16.6% |
| Humectant (Glycerol) | 33.2% |
| Lecithin | 0.41% |

100g of dry citrus fibre powder was dispersed in 300g of molten cocoa butter substitute (Palm Kernel Oil) and lecithin (7.5g) at a temperature of 55°C using a the liquidizer jug attachment of a Kenwood Multi-Pro food processor operating at maximum speed for a duration of 2 minutes.

200g of glycerol was warmed to 55°C and added slowly and incrementally to the dispersion of fibre with continuous high speed. A homogeneous mix of all four components was made, the water being evenly distributed amongst the dispersion of fibre particles. The total period of mixing during the addition of water was 30 minutes. The mixture was allowed to cool and solidify at ambient temperature. Alternatively the mixture can be stored warm (e.g. at around 50°C) ready for later use.

### Reference Example 4 (E4):

Reference Composition E4 was prepared with a composition as follows:

| | |
|---|---|
| Fat (Palm Kernel Oil) | 49.79% |
| Wheat Fibre (Wheat WF101 Vitacel® Rettenmair) | 16.6% |
| Humectant (Glycerol) | 33.2% |
| Lecithin | 0.41% |

100g of dry wheat fibre powder was dispersed in 300g of molten cocoa butter substitute (Palm Kernel Oil) and lecithin (7.5g) at a temperature of 55°C using a the liquidizer jug attachment of a Kenwood Multi-Pro food processor operating at maximum speed for a duration of 2 minutes.

200g of glycerol was warmed to 55°C and added slowly and incrementally to the dispersion of fibre with continuous high speed. A homogeneous mix of all four components was made, the water being evenly distributed amongst the dispersion of fibre particles. The total period of mixing during the addition of water was 30 minutes. The mixture was allowed to cool and solidify at ambient temperature. Alternatively the mixture can be stored warm (e.g. at around 50°C) ready for later use.

### Example 5

### Preparation of Tropicalizing agent compositions- Method 1

Tropicalizing agent composition of the invention were prepared according to ingredients and amounts reported in Table 1 herebelow by adding enzyme preparation to the starting material prepared as described in reference Examples 1 to 4. Mixing was carried out for 5 minutes at 45°C using a paddle (spatula). Alternatively, It could also be achieved in a "Kenwood Multi-Pro food processor" operating at low speed for a duration of 2 minutes.

**Table 1**

| **Tropicalizing Agent Composition** | **Starting material** | **Enzyme Preparation 1** [NS27229 (Novozyme Switzerland) - Activity: 700EGU/g (Endoglucanase Unit)] | **Enzyme Preparation 2** [Rohament ® CL (AB Enzymes)-Activity: 15,000 ECU/g] |
|---|---|---|---|
| **E1e1** | Ref. Example 1 (6g) | 0.02g | |
| **E1e2** | Ref. Example 1(6g) | | 0.02g |
| **E2e1** | Ref. Example 2 (6g) | 0.02g | |
| **E3e1** | Ref. Example 3 (6g) | 0.02g | |
| **E4e1** | Ref. Example 4 (6g) | 0.2g | |

### Example 6

### Preparation of Chocolate Analogue Mass

Samples of Chocolate analogue mass were produced by incorporation of Examples Compositions E1, E2, E3 , E4 , E1e1, E1e2, E2e1, E3e1 and E4e1 into liquid compound [Sugar (44.5%), Palm Kernel oil (27.23%), Skimmed milk powder (22%), cocoa powder (6%), lecithin (0.23%)]at a ratio of Example Compositions: Compound = 6: 94 w/w. The samples were mixed thoroughly using an overhead mixer with a w-shape paddle, set at 100RPM for 20 minutes.

### Example 7

### Heat stability of tropicalized chocolate products - Measurement of shape retention

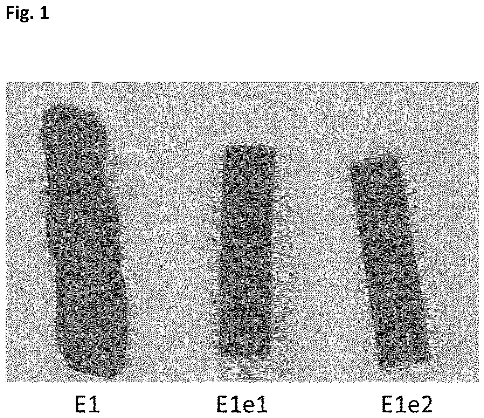

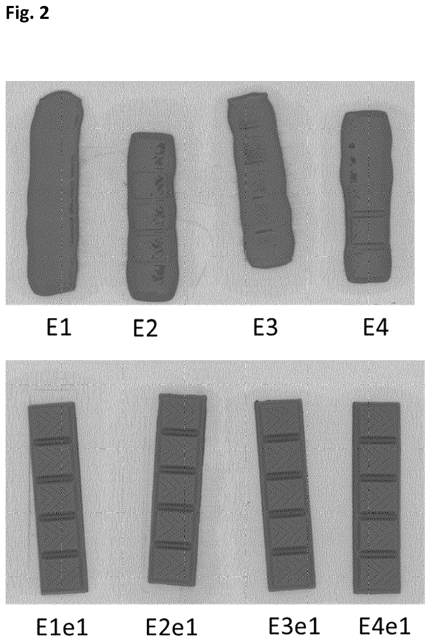

Samples of different chocolate analogue masses prepared according Example 6 were moulded into bars and stored at 22°C and analysed after 22 days. A "slam test" (mechanical sheer) was performed, the results of which were photographed (and reported Fig 1 and 2) and volume change measured as an SRI (shape retention index = (11 x w1)/(l2 x w2) where l1 and w1 are the length and width of the bar before heating, and l2 and w2 are the length and width dimensions of the minimal rectangle area that fully contains the sample after heat and mechanical shock test). Results obtained are reported in Table 2 herebelow. For the tested samples, a perfect SRI would be 1 and a fully melted compound only sample SRI would be 1.93.

The technique applied to evaluate the shape and dimensional stability of chocolate subject to high temperatures comprises:
(i) Forming the liquid chocolate samples into bars with standardised dimensions by pouring into moulds of identical dimensions, and allowing to cool and solidify.
(ii) Demoulding the chocolate bars and measuring the dimensions (length x width) of the solid chocolate bar before heating
(iii) Storage of chocolate bars at ambient conditions for up to 22 days.
(iv) Heating the chocolate bars on a horizontal metal tray to 40°C for adequate time to fully melt the fat matrix (1 hour heating applied in these tests).
(v) Then subjecting the sample to mechanical shock in the form of repeated forced impact from vertically below by banging on the table. Allowing the chocolate to cool and re-solidify, and then measuring the dimensions of the minimum rectangular area that fully contains the spread of the sample chocolate product after heat treatment.
(vi) Calculation of the shape retention index SRI (*l₁* x *w*₁)/(*l₂* x *w*₂). where *l₁* and *w*₁ are the length and width of the bar before heating, and *l₂* and *w*₂ are the length and width dimensions of the minimal rectangle area that fully contains the sample after heat and mechanical shock test

**Table 2**

| **Samples Identifier** | **Shape retention index (SRI)** |
|---|---|
| Bar incorporating Comp E1 | 1.848 |
| Bar incorporating Comp E2 | 1.428 |
| Bar incorporating Comp E3 | 1.344 |
| Bar incorporating Comp E4 | 1.386 |
| Bar incorporating Comp E1e1 | 1 |
| Bar incorporating Comp E1e2 | 1 |
| Bar incorporating Comp E2e1 | 1 |
| Bar incorporating Comp E3e1 | 1 |
| Bar incorporating Comp E4e1 | 1 |

The results clearly show an increase in shape retention index with inclusion of the enzyme preparations tested.

### Example 8

### Heat stability of tropicalized chocolate analogue products - Measurement resistance to penetration

Samples of different chocolate mass prepared according Example 6 were moulded into bars following method the method below
(i) Forming the liquid chocolate samples into 25g disks with standardised dimensions by pouring into moulds of identical dimensions, and allowing to cool and solidify.
(ii) Storage of chocolate disks at ambient conditions for up to 30 days.
(iii) Heating the chocolate disk on a horizontal metal tray to 40°C for adequate time to fully melt the fat matrix (1 hour heating applied in these tests).
(iv) Then subjecting the samples to texture analysis using a TA.XT Texture Analyser Microsystems, using a 40mm back extrusion disk geometry. The test profile uses a penetration speed of 1mm/s and a penetration depth of 3mm

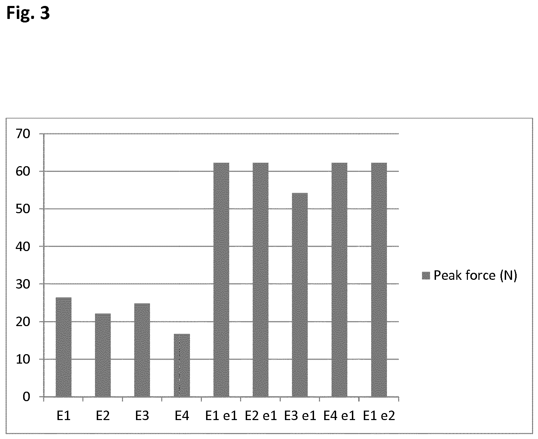

Results are herebelow reported in Table 3 and represented in Fig.3

**Table 3**

| **Sample Identifier** | **Peak force** |
|---|---|
| Disk incorporating comp E1 | 26.54 |
| Disk incorporating comp E2 | 22.19 |
| Disk incorporating comp E3 | 24.93 |
| Disk incorporating comp E4 | 16.74 |
| Disk incorporating comp E1e1 | 62.32 |
| Disk incorporating comp E2e1 | 62.32 |
| Disk incorporating comp E3e1 | 54.38 |
| Disk incorporating comp E4e1 | 62.32 |
| Disk incorporating comp E1e2 | 62.32 |

The results shown difference between samples incorporating enzyme preparations when compared to no enzyme addition with a clear heat stability increase achieved by samples incorporating enzymes.

### Example 9

### Preparation of wafer or biscuits enrobed with Tropicalized Chocolate

The biscuits or wafer products are conveyed through a curtain of liquid chocolate / compound (mass temperatures may vary between 30-45°C) which may be prepared according to the procedure described above in Example 6. This process covers the product in an even coating of mass. Variations on the process include but are not limited to a double coating, a shoulder coating (only coating the bottom of the product) and a double coating with the addition of inclusions between the curtains. The product then passes through a cooling tunnel (8-14°C) for a time suitable to allow the product to be removed from the belt without damage.

### Example 10

### Preparation of Tropicalised Chocolate analogue by incorporation of the enzyme preparation into the chocolate analogue mass

To the chocolate analogue mass of Example 6 (obtained from tropicalizing agent composition E1),, 0.02083% of the enzyme preparation 1 [e1, NS27229 (Novozyme Switzerland)] is added, this is then mixed at 45°C for 10 minutes to ensure even distribution. 6% w/w of tropicalising agent (manufactured as shown in example 1-3) was added to the chocolate / enzyme mix and the samples were mixed thoroughly using an overhead mixer with a w-shape paddle, set at 100RPM for 20 minutes.

### Example 11

### Preparation of Tropicalizing agent composition - Method 2

| | |
|---|---|
| Fat (Palm Kernel Oil) | 49.69% |
| Wheat Fibre (Wheat WF101 Vitacel® Rettenmair) | 16.5% |
| Humectant (Glycerol) | 33.1% |
| Lecithin | 0.41% |
| Enzyme (NS27220) | 0.03% |

100g of dry wheat fibre powder was dispersed in 300g of molten cocoa butter substitute (Palm Kernel Oil) and lecithin (7.5g) at a temperature of 55°C using a the liquidizer jug attachment of a Kenwood Multi-Pro food processor operating at maximum speed for a duration of 2 minutes.

200g of glycerol was warmed to 55°C and mixed with 1.82g of of enzyme, this mix was then added slowly and incrementally to the dispersion of fibre with continuous high speed. A homogeneous mix of all four components was made, the water being evenly distributed amongst the dispersion of fibre particles. The total period of mixing during the addition of water was 30 minutes.

The mixture was allowed to cool and solidify at ambient temperature. Alternatively the mixture can be stored warm (e.g. at around 50°C) ready for later use.

## Claims

1. Use of an enzyme preparation having a cellulase activity to progressively release water and/or humectant from a tropicalizing agent comprising a liquid fat component and a plurality of discrete particles of insoluble water-absorbing food ingredient material loaded with water and/or a liquid humectant dispersed in the liquid fat component, wherein the insoluble water absorbing food ingredient material comprises cellulosic structures.

2. Use of an enzyme preparation having a cellulase activity for improving the heat stability of a chocolate or chocolate analogue product comprising a liquid fat component and discrete particles of insoluble water-absorbing food ingredient material as a carrier component loaded with water and/or a humectant, wherein the insoluble water absorbing food ingredient material comprises cellulosic structures.

3. Use according to claims 1 or 2 wherein the insoluble water absorbing ingredient food material is loaded with water and/or glycerol.

4. Use according to anyone of claims 1 to 3 wherein the insoluble water absorbing food material is a dietary fiber comprising cellulosic structures.

5. Use according to anyone of claims 1 to 4 wherein the insoluble water absorbing food ingredient material is a dietary fiber selected in the group consisting of: citrus fibres, apple fibre, oat fibre, wheat fibre and potato fibre.

6. Use according to anyone of claims 1 to 5 wherein the insoluble water absorbing food ingredient material is Microcrystalline celllose (MCC).

7. Use according to anyone of claims 1 to 6 wherein the liquid fat is cocoa butter.

8. A tropicalizing agent composition comprising a liquid fat component, a plurality of discrete particles of insoluble water-absorbing food ingredient material loaded with water and/or a liquid humectant dispersed in the liquid fat component and an enzyme preparation having a cellulase activity, wherein the insoluble water absorbing food ingredient material comprises cellulosic structures.

9. A tropicalizing agent composition according to claim 8 wherein the insoluble water absorbing ingredient food material is loaded with water and/or glycerol.

10. A tropicalizing agent composition according to claim 8 or 9 wherein the insoluble water absorbing food ingredient material is a dietary fiber selected in the group consisting of: citrus fibres, apple fibre, oat fibre, wheat fibre and potato fibre.

11. A process for preparing a tropicalizing agent composition according to anyone of claims 8 to 10 comprising the steps of (a) mixing insoluble water-absorbing food ingredient particles in a liquid fat, (b) adding water and/or a humectant liquid to the mixture of step (a) in an amount to provide a ratio of water and/or humectant liquid to water-absorbing food ingredient particles such that the water and/or humectant liquid is absorbed by the discrete particles and (c) adding to the mixture of step (b) an enzyme preparation comprising at least one enzyme having a cellulase activity.

12. A process for preparing a tropicalizing agent composition according anyone of claims 8 to 10 comprising the steps of: (a) mixing insoluble water-absorbing food ingredient particles in a liquid fat, and (b) adding water and/or a humectant liquid and an enzyme preparation having a cellulase activity to the mixture of step (a) in an amount to provide a ratio of water and/or humectant liquid to water-absorbing food ingredient particles such that the water and/or humectant liquid is absorbed by the discrete particles, wherein the insoluble water absorbing food ingredient material comprises cellulosic structures.

13. Use of a tropicalizing agent composition according to anyone of claims 8 to 10 for improving the heat stability of a chocolate or chocolate analogue product.

14. A process for tropicalizing chocolate, or an analogue thereof, by combining a chocolate or a chocolate analogue mass, optionally a tempered chocolate mass or untempered chocolate analogue mass, with a tropicalizing agent composition according to anyone of claims 8 to 10.

15. A chocolate or chocolate analogue product comprising a tropicalizing agent composition according to anyone of claims 8 to 10.

16. A process for tropicalizing chocolate, or an analogue thereof, by combining a chocolate or a chocolate analogue mass, optionally a tempered chocolate mass or untempered chocolate analogue mass, with a tropicalizing agent comprising a liquid fat component, a plurality of discrete particles of insoluble water-absorbing food ingredient material loaded with water and/or a humectant liquid dispersed in the liquid fat component and with an enzyme preparation having a cellulase activity, wherein the insoluble water absorbing food ingredient material comprises cellulosic structures.

## Patentansprüche

1. Verwendung eines Enzympräparats mit Cellulaseaktivität zur fortschreitenden Freisetzung von Wasser und/oder Feuchthaltemittel aus einem Tropikalisierungsmittel, das eine flüssige Fettkomponente und eine Vielzahl von diskreten Teilchen aus unlöslichem wasserabsorbierendem Nahrungsmittelzutatenmaterial, das mit Wasser und/oder einem in der flüssigen Fettkomponente dispergierten flüssigen Feuchthaltemittel beladen ist, umfasst, wobei das unlösliche wasserabsorbierende Nahrungsmittelzutatenmaterial Cellulosestrukturen umfasst.

2. Verwendung eines Enzympräparats mit Cellulaseaktivität zur Verbesserung der Wärmestabilität eines Schokoladen- oder Schokoladenanalogons, das eine flüssige Fettkomponente und diskrete Teilchen aus unlöslichem wasserabsorbierendem Nahrungsmittelzutatenmaterial als eine Trägerkomponente, die mit Wasser und/oder einem Feuchthaltemittel beladen ist, umfasst, wobei das unlösliche wasserabsorbierende Nahrungsmittelzutatenmaterial Cellulosestrukturen umfasst.

3. Verwendung nach Anspruch 1 oder 2, wobei das unlösliche, wasserabsorbierende Nahrungsmittelzutatenmaterial mit Wasser und/oder Glycerin beladen ist.

4. Verwendung nach einem der Ansprüche 1 bis 3, wobei das unlösliche wasserabsorbierende Nahrungsmittelmaterial eine Nahrungsfaser ist, die Cellulosestrukturen umfasst.

5. Verwendung nach einem der Ansprüche 1 bis 4, wobei das unlösliche wasserabsorbierende Nahrungsmittelzutatenmaterial eine Nahrungsfaser ist, die ausgewählt ist aus der Gruppe bestehend aus: Zitrusfasern, Apfelfasern, Haferfasern, Weizenfasern und Kartoffelfasern.

6. Verwendung nach einem der Ansprüche 1 bis 5, wobei das unlösliche wasserabsorbierende Nahrungsmittelzutatenmaterial mikrokristalline Cellulose (MCC) ist.

7. Verwendung nach einem der Ansprüche 1 bis 6, wobei das flüssige Fett Kakaobutter ist.

8. Tropikalisierungsmittel-Zusammensetzung, die eine flüssige Fettkomponente, eine Vielzahl von diskreten Teilchen aus unlöslichem, wasserabsorbierendem Nahrungsmittelzutatenmaterial, das mit Wasser und/oder einem in der flüssigen Fettkomponente dispergierten flüssigen Feuchthaltemittel beladen ist, und ein Enzympräparat mit einer Cellulaseaktivität umfasst, wobei das unlösliche wasserabsorbierende Nahrungsmittelzutatenmaterial Cellulosestrukturen umfasst.

9. Tropikalisierungsmittel-Zusammensetzung nach Anspruch 8, wobei das unlösliche, wasserabsorbierende Nahrungsmittelzutatenmaterial mit Wasser und/oder Glycerin beladen ist.

10. Tropikalisierungsmittel-Zusammensetzung nach Anspruch 8 oder 9, wobei das unlösliche wasserabsorbierende Nahrungsmittelzutatenmaterial eine Nahrungsfaser ist, die ausgewählt ist aus der Gruppe bestehend aus: Zitrusfasern, Apfelfasern, Haferkfasern, Weizenfasern und Kartoffelfasern.

11. Verfahren zum Herstellen einer Tropikalisierungsmittel-Zusammensetzung nach einem der Ansprüche 8 bis 10, das die folgenden Schritte umfasst: (a) Mischen von unlöslichen wasserabsorbierenden Nahrungsmittelzutatenteilchen in einem flüssigen Fett, (b) Zugeben von Wasser und/oder einem flüssigen Feuchthaltemittel zu der Mischung aus Schritt (a) in einer Menge, um ein Verhältnis von Wasser und/oder flüssigem Feuchthaltemittel zu wasserabsorbierenden Nahrungsmittelzutatenteilchen bereitzustellen, sodass das Wasser und/oder flüssige Feuchthaltemittel von den diskreten Teilchen absorbiert wird, und (c) Zugeben eines Enzympräparats, das mindestens ein Enzym mit einer Cellulaseaktivität umfasst, zu der Mischung aus Schritt (b).

12. Verfahren zum Herstellen einer Tropikalisierungsmittel-Zusammensetzung nach einem der Ansprüche 8 bis 10, das die folgenden Schritte umfasst: (a) Mischen von unlöslichen wasserabsorbierenden Nahrungsmittelzutatenteilchen in einem flüssigen Fett, und (b) Zugeben von Wasser und/oder einem flüssigen Feuchthaltemittel und eines Enzympräparas mit einer Cellulaseaktivität zu der Mischung aus Schritt (a) in einer Menge, um ein Verhältnis von Wasser und/oder flüssigem Feuchthaltemittel zu wasserabsorbierenden Nahrungsmittelzutatenteilchen bereitzustellen, sodass das Wasser und/oder flüssige Feuchthaltemittel von den diskreten Teilchen absorbiert wird, wobei das unlösliche wasserabsorbierende Nahrungsmittelzutatenmaterial Cellulosestrukturen umfasst.

13. Verwendung einer Tropikalisierungsmittel-Zusammensetzung nach einem der Ansprüche 8 bis 10 zur Verbesserung der Wärmestabilität eines Schokoladen- oder Schokoladenanalogonprodukts.

14. Verfahren zum Tropikalisieren von Schokolade oder eines Analogons davon durch Kombinieren einer Schokolade oder einer Schokoladenanalogonmasse, wahlweise einer temperierten Schokoladenmasse oder einer nicht temperierten Schokoladenanalogonmasse, mit einer Tropikalisierungsmittel-Zusammensetzung nach einem der Ansprüche 8 bis 10.

15. Schokoladen- oder Schokoladenanalogonprodukt, das eine Tropikalisierungsmittel-Zusammensetzung nach einem der Ansprüche 8 bis 10 umfasst.

16. Verfahren zum Tropikalisieren von Schokolade oder eines Analogons davon durch Kombinieren einer Schokolade oder einer Schokoladenanalogonmasse, wahlweise einer temperierten Schokoladenmasse oder einer nicht temperierten Schokoladenanalogonmasse, mit einem Tropikalisierungsmittel, das eine flüssige Fettkomponente, eine Vielzahl von diskreten Teilchen aus unlöslichem, wasserabsorbierendem Lebensmittelzutatenmaterial, das mit Wasser und/oder einem in der flüssigen Fettkomponente dispergierten flüssigen Feuchthaltemittel beladen ist, umfasst und mit einem Enzympräparat mit einer Cellulaseaktivität, wobei das unlösliche, wasserabsorbierende Lebensmittelzutatenmaterial Cellulosestrukturen umfasst.

## Revendications

1. Utilisation d'une préparation enzymatique ayant une activité de cellulase pour libérer progressivement de l'eau et/ou un humectant à partir d'un agent de tropicalisation comprenant un composant gras liquide et une pluralité de particules discrètes de matériau d'ingrédient alimentaire insoluble absorbant l'eau, chargées d'eau et/ou d'un humectant liquide dispersé dans le composant gras liquide, dans laquelle le matériau d'ingrédient alimentaire insoluble absorbant l'eau comprend des structures cellulosiques.

2. Utilisation d'une préparation enzymatique ayant une activité de cellulase pour améliorer la stabilité thermique d'un chocolat ou d'un succédané de chocolat comprenant un composant gras liquide et des particules discrètes de matériau d'ingrédient alimentaire insoluble absorbant l'eau comme composant véhiculaire chargé avec de l'eau et/ou un humectant, dans laquelle le matériau d'ingrédient alimentaire insoluble absorbant l'eau comprend des structures cellulosiques.

3. Utilisation selon les revendications 1 ou 2, dans laquelle le matériau d'ingrédient alimentaire insoluble absorbant l'eau est chargé avec de l'eau et/ou du glycérol.

4. Utilisation selon l'une quelconque des revendications 1 à 3, dans laquelle le matériau alimentaire insoluble absorbant l'eau est une fibre alimentaire comprenant des structures cellulosiques.

5. Utilisation selon l'une quelconque des revendications 1 à 4, dans laquelle le matériau d'ingrédient alimentaire insoluble absorbant l'eau est une fibre alimentaire choisie dans le groupe constitué de : fibres d'agrumes, fibre de pomme, fibre d'avoine, fibre de blé et fibre de pomme de terre.

6. Utilisation selon l'une quelconque des revendications 1 à 5, dans laquelle le matériau d'ingrédient alimentaire insoluble absorbant l'eau est de la cellulose microcristalline (CMC).

7. Utilisation selon l'une quelconque des revendications 1 à 6 dans laquelle la matière grasse liquide est du beurre de cacao.

8. Composition d'agent de tropicalisation comprenant un composant gras liquide, une pluralité de particules discrètes de matériau d'ingrédient alimentaire insoluble absorbant l'eau chargées avec de l'eau et/ou un humectant liquide dispersé dans le composant gras liquide et une préparation enzymatique ayant une activité de cellulase, dans laquelle le matériau d'ingrédient alimentaire insoluble absorbant l'eau comprend des structures cellulosiques.

9. Composition d'agent de tropicalisation selon la revendication 8, dans laquelle le matériau d'ingrédient alimentaire insoluble absorbant l'eau est chargé avec de l'eau et/ou du glycérol.

10. Composition d'agent de tropicalisation selon la revendication 8 ou 9, dans laquelle le matériau d'ingrédient alimentaire insoluble absorbant l'eau est une fibre alimentaire choisie dans le groupe constitué par : fibres d'agrumes, fibre de pomme, fibre d'avoine, fibre de blé et fibre de pomme de terre.

11. Procédé de préparation d'une composition d'agent de tropicalisation selon l'une quelconque des revendications 8 à 10, comprenant les étapes consistant à (a) mélanger des particules d'ingrédient alimentaire insoluble absorbant l'eau dans une matière grasse liquide, (b) ajouter de l'eau et/ou un liquide humectant au mélange de l'étape (a) en une quantité pour fournir un rapport de l'eau et/ou du liquide humectant aux particules d'ingrédient alimentaire absorbant tel que l'eau et/ou le liquide humectant sont absorbés par les particules discrètes et (c) ajouter au mélange de l'étape (b) une préparation enzymatique comprenant au moins une enzyme ayant une activité de cellulase.

12. Procédé de préparation d'une composition d'agent de tropicalisation selon l'une quelconque des revendications 8 à 10, comprenant les étapes consistant à : (a) mélanger des particules d'ingrédient alimentaire insoluble absorbant l'eau dans une matière grasse liquide, et (b) ajouter de l'eau et/ou un liquide humectant et une préparation enzymatique ayant une activité de cellulase au mélange de l'étape (a) en une quantité pour fournir un rapport de l'eau et/ou du liquide humectant aux particules d'ingrédient alimentaire absorbant l'eau tel que l'eau et/ou le liquide humectant sont absorbés par les particules discrètes,dans lequel l'ingrédient alimentaire insoluble absorbant l'eau comprend des structures cellulosiques.

13. Utilisation d'une composition d'agent de tropicalisation selon l'une quelconque des revendications 8 à 10, pour améliorer la stabilité thermique d'un produit de chocolat ou de succédané de chocolat.

14. Procédé de tropicalisation de chocolat, ou d'un succédané de celui-ci, par combinaison d'une masse de chocolat ou de succédané de chocolat, éventuellement d'une masse de chocolat tempéré ou d'une masse de succédané de chocolat non tempéré, avec une composition d'agent de tropicalisation selon l'une quelconque des revendications 8 à 10.

15. Chocolat ou succédané de chocolat comprenant une composition d'agent de tropicalisation selon l'une quelconque des revendications 8 à 10.

16. Procédé de tropicalisation de chocolat, ou d'un succédané de celui-ci, en combinant une masse de chocolat ou de succédané de chocolat, éventuellement une masse de chocolat tempéré ou une masse de succédané de chocolat non tempéré, avec un agent de tropicalisation comprenant un composant gras liquide, une pluralité de particules discrètes de matériau d'ingrédient alimentaire insoluble absorbant l'eau chargées avec de l'eau et/ou un liquide humectant dispersé dans le composant gras liquide et avec une préparation enzymatique ayant une activité de cellulase, dans lequel le matériau d'ingrédient alimentaire insoluble absorbant l'eau comprend des structures cellulosiques.
